# FASCICULE DE BREVET EUROPEEN

(11) **EP 1 311 335 B1**
(45) Date de publication et mention de la délivrance du brevet: **27.10.2004**
(21) Numéro de dépôt: 01965349.2
(22) Date de dépôt: 24.08.2001
(51) Int. Cl.: B01D 45/16, B01D 53/24

(54) **PROCEDE ET DISPOSITIF DE SEPARATION OU D'ENRICHISSEMENT DE LA CONCENTRATION DANS UN MELANGE DE COMPOSANTS GAZEUX OU LIQUIDES**
VERFAHREN UND VORRICHTUNG ZUM ABSCHEIDEN ODER ANREICHERUNG DER ZUSAMMENSETZUNG AUS EINEM GASFÖRMIGEN ODER FLÜSSIGEN GEMISCH
METHOD AND DEVICE FOR SEPARATING OR ENRICHING CONCENTRATION IN A MIXTURE OF GASEOUS OR LIQUID CONSTITUENTS

(30) Priorité: 24.08.2000 FR 0010907
(43) Date de publication de la demande: 21.05.2003
(73) Titulaire: Bellini, Jacques, 13008 Marseille (FR)
(72) Inventeur: Bellini, Jacques, 13008 Marseille (FR)
(74) Mandataire: Roman, Michel
(86) Numéro de dépôt international: PCT/FR2001/002665
(87) Numéro de publication internationale: WO 2002/016006

(56) Documents cités:
- DE-A- 2 342 291
- DE-C- 641 876
- FR-A- 2 753 392
- US-A- 2 360 066

## Description

La présente invention a pour objet un procédé et un dispositif de séparation partielle ou totale ou d'enrichissement de la concentration d'un ou plusieurs composés contenus dans un mélange de composants gazeux ou liquides.

Elle se rapporte d'une manière générale au domaine industriel et commercial de la fabrication et de la diffusion de matériels destinés à la séparation de composés chimiques ou gazeux, à la préparation de produits enrichis en concentration par rapport à leur concentration initiale, à la séparation d'éléments contenus dans des mélanges liquides ou gazeux parmi lesquels on peut citer, sans que cela soit limitatif :
- les systèmes de préparation de gaz purs à partir de l'air atmosphérique (gaz nobles, hydrogène par exemple),
- les systèmes de filtration de l'air ambiant (ateliers, salles blanches, locaux tertiaires, hôpitaux, établissements ouverts au public, alimentation en air comburant des moteurs thermiques),
- les systèmes de filtration des gaz (installations chimiques, gaz d'échappement des moteurs thermiques et des foyers, gaz d'alimentation des turbines, émissions des cheminées industrielles),
- les systèmes de récupération et tri suivant leur tailles aérodynamiques des particules en suspension pour valorisation (cimenteries, sucreries, semouleries, moulins à grains),
- les filtres à eau pour installations hydrauliques (domestiques, piscines, pompes immergées, adduction d'eau potable),
- les filtre à liquide (installations chimiques, huile de graissage des moteurs thermiques et des turbines, industrie alimentaire, jus de fruits, vins, laitages),
- les systèmes de récupération des particules en suspension dans un liquide (chimie préparatrice, biologie et microbiologie, industrie alimentaire),
- les systèmes de concentration de composants gazeux en un isotope de ce composant (uranium par exemple),
- les systèmes d'enrichissement à la concentration d'un composant liquide contenu dans un mélange (biologie, pharmacie, chimie).

Les dispositifs utilisés à ce jour sont dans la plupart des cas soit des systèmes cycloniques limités à la filtrations de particules supérieures à 50 ou 100 microns, soit des systèmes équipés d'éléments filtrants qui se colmatent progressivement en provoquant une diminution du rendement du système et qu'il faut remplacer ou nettoyer périodiquement, soit encore des dispositifs de séparation par voie cryogénique, par adsorption/désorption, par chromatographie.
Dans le cas particulier des composés liquides, il faut également citer l'extraction chimique, l'extraction par évaporation différentielle ou par effet thermique, la séparation sur résine ou par osmose.
La plupart de ces procédés sont, lorsqu'on désire l'obtention de produits très purs, des procédés industriels lourds et consommateurs d'énergie utilisable que dans des conditions industriels.

Le dispositif décrit dans le brevet N° FR 2 753 392, déposé par le même inventeur, permet de remédier partiellement à ces inconvénients. Toutefois sa principale application n'est pas la filtration mais la séparation et l'élimination par pyrolyse des particules et l'adsorption des gaz polluants. II est destiné à la dépollution des effluents gazeux avant leur rejet à l'atmosphère et est basé sur la séparation par centrifugation des particules à extraire du flux gazeux à traiter, grâce à leur forte différence de masse comparativement aux molécules d'air, et sur la destruction de ces particules par pyrolyse, la séparation étant réalisée dans un conduit hélicoïdal pourvu de pièges arrêtant les particules lourdes et communicant chacun avec une chambre de pyrolyse dans laquelle elles sont périodiquement aspirées et où sont détruits les éléments combustibles et stockés les éléments incombustibles pour évacuation lors des opérations de maintenance.

Le document DE 23 42 291 A décrit la séparation de plusieurs composés contenus dans un mélange de composants gazeux ou liquides.

Dans le système selon l'invention, contrairement à la majorité des dispositifs existants, la filtration et la séparation est réalisée sans utilisation de média ou de barrière filtrante, par utilisation des différences de masses entre les particules et les molécules du fluide vecteur et non pas par la différence de tailles entre les particules et les molécules de ce fluide. Mais, à la différence des dispositifs cycloniques connus utilisant cette différence de masse et qui ne font que mettre en mouvement hélicoïdal libre les particules à une vitesse de rotation limitée parce qu'au-delà d'une certaine vitesse les particules projetées sur la paroi du cyclone sont reprises par le flux et entraînées sans être éliminées, l'invention permet la filtration en continu, de particules largement submicroniques (0.01 micromètres ou mieux).
Le système ne comporte aucune pièce mécanique en mouvement, c'est le fluide injecté sous une pression suffisante dans le système qui se met en mouvement de rotation hélicoïdal. Cette caractéristique permet d'atteindre sans aucune difficulté, avec des dispositifs de construction aisée et de petites dimensions, des vitesses de rotation supérieures à 1 million de tours / minute et des accélérations de plusieurs millions de g, ce que ne permettent pas les systèmes connus.

Le nouveau dispositif est complémentaire de celui faisant l'objet du brevet du même inventeur mentionné ci-dessus et utilise partiellement le principe présenté dans ce document, mais les améliorations apportées par les innovations contenues dans la présente invention permettent l'élargissement du champ d'action couvert et l'amélioration des performances.

Le procédé consiste à introduire, par l'effet d'une pression, le fluide contenant plusieurs sortes de molécules dans un conduit hélicoïdal multi-spires et à lui faire subir une trajectoire forcée permettant d'atteindre de très grandes vitesses de rotation pouvant atteindre plusieurs millions de tours/minute, un ou plusieurs orifices de sortie étant placés sur la paroi et reliés à des dispositifs de récupération, chaque orifice étant équipé d'un système de régulation de débit n'autorisant le passage que d'un débit égal au débit calculé à cet endroit des molécules d'un des composants choisi du mélange, à une concentration elle aussi choisie.

Sur les dessins annexés, donnés à titre d'exemples non limitatifs de formes de réalisations conformes à la présente demande :
la figure 1 est un schéma illustrant le principe de base du système de filtration,
la figure 2 est une coupe transversale à plus grande échelle d'une spire du conduit hélicoïdal de la figure 2 montrant le trajet d'une particule jusqu'à son élimination du flux à filtrer et sa capture dans une trémie de récupération,
la figure 3 est un agrandissement du détail A de la figure 2,
la figure 4 est un schéma montrant une variante du système selon l'invention
et la figure 5 est une coupe transversale à plus grande échelle d'une spire du conduit hélicoïdal de la figure 4 montrant le trajet de molécules de masse différentes et le principe de collection de l'une d'entre elles.

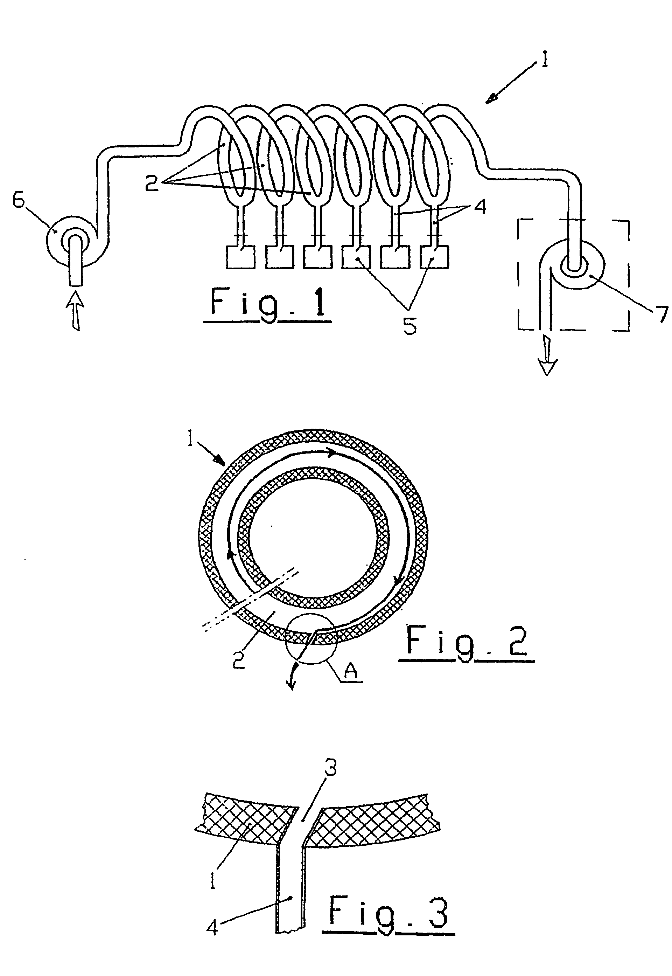

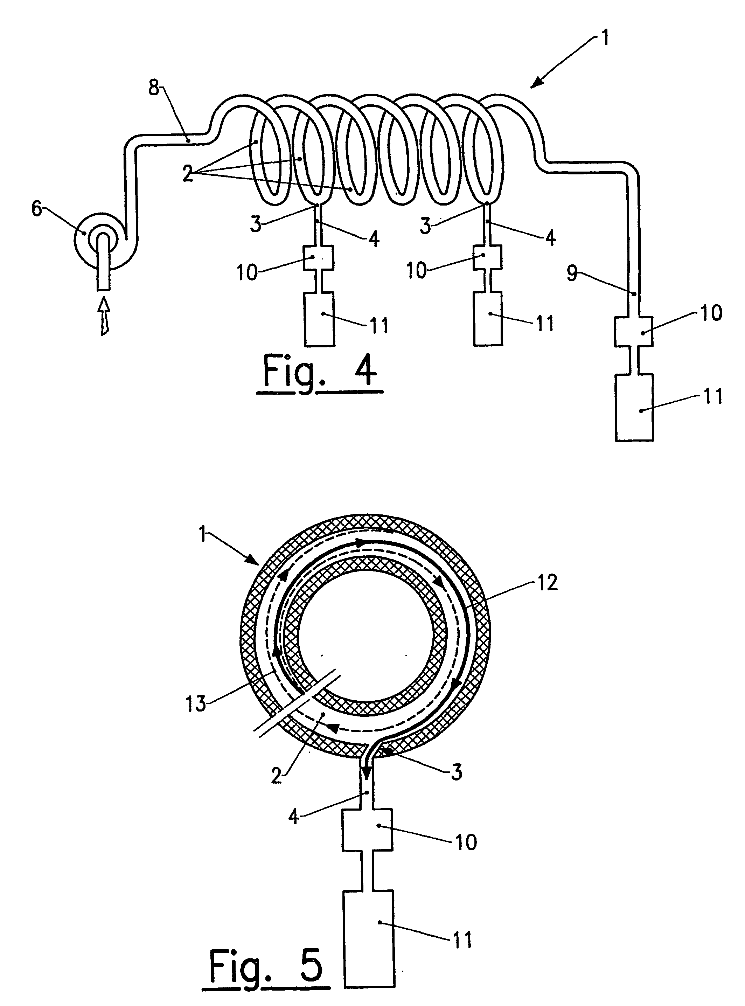

Le dispositif, figures 1 à 5, est constitué de cellules de filtration formées d'un conduit hélicoïdal 1 comportant plusieurs spires 2 percées chacune, ou une sur deux, ou une sur plus de deux, mais en tous cas au moins une par cellule, d'un orifice 3 d'un diamètre proche du diamètre interne du conduit placé sur la paroi correspondant au plus grand diamètre des spires 2 et raccordé à un dispositif de collecte.
Le conduit hélicoïdal 1 est de dimensions calculées et comporte un nombre de spires 2, lui aussi calculé en fonction des différents paramètres (composition du mélange, caractéristiques massiques des composants à recueillir, diamètre du conduit, pas de l'hélice, viscosité, coefficients de diffusion mutuels des composants, température, pression, débit, etc...).
Le mélange est introduit à la pression nécessaire pour obtenir la vitesse de rotation désirée par l'entrée 8.
Ces calculs permettent de déterminer les distances à partir du point d'entrée au bout desquelles les composants atteindront la proximité de la paroi du conduit. Ces composants atteindront successivement cette paroi en fonction, entre autres, de la masse de leurs molécules, les plus lourds atteignant les premiers cette paroi.
Une fois les calculs faits, il est possible de déterminer la distance à partir de laquelle on peut recueillir chaque composant, ou un seul, ou certains d'entre eux. il faut noter que le but de l'opération peut être inversé et qu'au lieu de vouloir recueillir ces composants, on peut vouloir les éliminer pour ne conserver que le plus léger à l'état pur ou enrichi, ce sera le cas, par exemple pour la préparation, avec ce dispositif, de l'Hydrogène ou du Xénon.
Lorsque les distances ont été détenninées, on place sur la ou les spires 2 correspondantes à ces distances un ou plusieurs dispositifs de collecte du
ou des composants recherchés.
Si c'est le composant ou le mélange de composants les plus légers qu'on désire récupérer, on place à la sortie 9 du circuit un dispositif de collecte identique à ceux placés sur les spires (figure 4). Dans le cas où ce dernier dispositif ne s'avère pas nécessaire, une perte de charge réglable doit être placé en fin de circuit pour pouvoir équilibrer les différents débits.

Sur les figures 1 à 3, chaque spire 2 comporte un orifice 3 communiquant, grâce à un conduit de transfert 4 avec une trémie 5 indépendante - et donc isolée des autres trémies - destinée à permettre aux particules entraînées vers la paroi externe des spires 2 par la force centrifuge de sortir du conduit 1 pour être envoyées dans les trémies de récupération.
Lorsqu'il n'est pas sous pression, le flux à filtrer est soit introduit dans le système par un appareil de compression 6 placé en amont du conduit hélicoïdal 1 et dirigés vers celui-ci, soit extrait par un appareil d'aspiration 7 placé en aval du conduit et obligeant, par la dépression exercée, le fluide à circuler dans le conduit.

Sur la figure 4, chacun des dispositifs de collecte est constitué d'et d'un régulateur de débit 10 automatique ou manuel, massique ou volumique débitant dans un élément de stockage 11. Le dispositif de collecte placé en sortie 9 de conduit pour la récupération des gaz légers, s'il est installé est connecté directement au conduit. Le point de consigne de chaque régulateur de débit est fixé au débit correspondant au débit du composant spécifique à recueillir dans le conduit à cet endroit précis du conduit ou pour celui disposé, éventuellement, en fin de conduit au débit résiduel du ou des gaz légers qu'on veut recueillir.
Chaque composant est recueilli dans un élément de stockage 11 qui doit être étudié pour ne pas rediluer le composant, c'est à dire soit dans un sac souple mis sous vide qui se remplira au fur et à mesure, soit dans un capacité solide mise sous vide, soit dans un système de type seringue à piston, soit un circuit d'utilisation immédiate.

Sur la figure 5 sont représentées les trajectoires schématiques de deux molécules de composants de masses moléculaires différentes. La molécule du gaz le plus lourd 12 injectée au même point que la molécule du gaz le plus léger 13 va se déplacer vers la paroi avec une plus grande vitesse et atteindre celle-ci avant la molécule la plus légère. Sous l'effet de la force centrifuge, elle va sortir du conduit par l'orifice 3 au débit que lui permettra d'atteindre le régulateur de débit 10.
La molécule la plus légère va poursuivre sa trajectoire hélicoïdale et subira, plus loin, le même sort que la molécule la plus lourde si un deuxième orifice équipé d'un deuxième régulateur de débit à été positionné plus loin sur le conduit. Si aucun autre dispositif de collecte n' a été positionné, cette molécule sortira avec le reste du mélange par la sortie 9 du conduit.

Une installation de filtration complète comprend plusieurs cellules élémentaires montées en parallèle, leur nombre et leurs dimensions étant calculés en fonction des débits et des pressions désirés.

Deux applications sont décrites ci-après à titre d'exemples

### 1) Récupération de Xénon à partir de l'air atmosphérique.

Dans ce cas, il s'agit de séparer et de récupérer un gaz noble dans de l'air atmosphérique qui comprend une dizaines de composants, le Radon est le gaz le plus lourd du mélange (M= 222) et le Xénon ( M=131) est le gaz le plus lourd après le Radon. On sait que le Xe est présent dans l'air avec une concentration constante de 87 ppb en volume ( 87 parties par milliard), on sait par dosage que le Radon dans cette expérience est considéré présent dans le mélange à raison de 8,7 ppb pour simplifier les calculs.
On souhaite obtenir du Xénon à une concentration égale à 100%
On envoie dans le conduit 1.000 m³/minute.

Pour récupérer le Xenon avec le procédé décrit, on équipera le conduit, dont on aura calculé auparavant les caractéristiques dimensionnelles et le débit à appliquer, de :
- Un orifice équipé d'un régulateur de débit destiné à éliminer le Radon, cet orifice sera placé sur le circuit sur la spire pour laquelle les calculs auront démontré que la totalité des molécules de Radon ont atteint la paroi. On fixera le point de consigne du régulateur de débit à une valeur égale au débit total de Radon. Ce débit est facile à calculer, il est égal au débit dans le conduit, 1.000 m3/minute, multiplié par la concentration en Radon, 8,7 ppb, ce débit est donc de 8,7 cm3/minute. Ce Radon peut être soit récupéré dans un enceinte tirée au vide soit par un autre procédé soit remis à l'atmosphère.
- Un deuxième orifice équipé d'un régulateur de débit destiné à récupérer le Xe, cet orifice sera, lui aussi, placé sur le circuit sur la spire pour laquelle les calculs auront démontré que la totalité des molécules de Xénon ont atteint la paroi, cette spire sera automatiquement en amont de la spire sur laquelle a été placé le dispositif d'élimination du radon puisque le Xe est plus léger que le Radon. On fixera le point de consigne du régulateur de débit à une valeur égale au débit de Xe calculé en fonction de sa concentration, soit suivant le même calcul que pour le Radon, à 87 cm³/minute. Ce Xénon sera récupéré dans une capacité tirée au vide ou dans un autre dispositif.

On peut signaler que si on avait désiré non pas du xénon pur mais du Xénon à une concentration plus basse, il aurait suffi d'augmenter, en conséquence, le débit du régulateur dont est équipé l'orifice réservé au Xénon ce qui aurait permis la récupération de l'ensemble du Xénon à son débit et d'autres composants de l'air pour le solde entre le débit maximum de Xénon et le débit de consigne du régulateur, on aurait pu, aussi, arriver au même résultat en plaçant l'orifice de récupération du Xénon sur une spire située en aval de celle désignée par le calcul, dans ce cas l'ensemble des molécules de Xénon n'auraient pas atteint la paroi et celui-ci aurait été puisé en l'état dilué.
Dans cette application seule la récupération du Xénon nous intéressait, donc le débit de gaz résiduel en sortie du conduit peut être librement mis à l'atmosphère.

### 2) Récupération d'Hydrogène à la sortie de réacteur d'un processus chimique

Dans cette application, on dispose d'un mélange de gaz comprenant, par exemple 30% d'Hydrogène, 50% d'Azote et 20% de monoxyde de Carbone. L'objectif consiste à récupérer l 'Hydrogène. L 'Hydrogène étant le plus léger des gaz présent, c'est lui qu'on retrouvera en sortie du conduit si on a éliminé avant les deux autres composants qui auront atteint la paroi alors que les molécules d'hydrogène m'auront pas subi de déplacement différentiel puisqu'elles sont les plus légères présentes dans le mélange et que la nature ne supporte pas le vide.
On introduit ce mélange à raison de 1.000 m³/minute dans le circuit.
Le circuit comprendra :
- Un orifice équipé d'un régulateur de débit destiné à éliminer le monoxyde de Carbone et l'Azote, cet orifice sera placé sur le circuit sur la spire pour laquelle les calculs auront démontré que la totalité des molécules de monoxyde de Carbone et d' Azote ont atteint la paroi. Ces deux gaz ont des masses molaires pratiquement identiques mais des coefficients de diffusion différents, ce qui fait que leurs molécules n'atteindront pas la paroi en même temps, il faudra calculer la spire pour laquelle toutes les molécules du composant le plus lent auront atteint la paroi.
   On fixera le point de consigne du régulateur de débit à une valeur égale au débit total de monoxyde de Carbone et d' Azote, Soit: 1.000 m³/minute multipliés par (50% + 20%) = 700 m³/minute.
- Un orifice équipé d'un régulateur de débit destiné à récupérer en sorties du conduit l'Hydrogène. On fixera le point de consigne du régulateur de débit à une valeur égale au débit résiduel d'Hydrogène Soit: 1.000 m³/minute multipliés par (30%) = 300 m³/minute. Cet Hydrogène est stocké, en sortie de circuit, par un dispositif prévu à cet effet.

Les différentes, innovation et amélioration apportées à ce dispositif par rapport au dispositif décrit dans le brevet N° FR 2 753 392 portent sur les points suivants :
a) Isolation de chaque orifice 3 et trémie 5 les uns par rapport aux autres alors que dans le dispositif initial tous les tubes de transfert aboutissaient dans une même chambre où s'effectuait une pyrolyse.
   Cette caractéristique est très importante car sans cette isolation de chaque orifice et des trémies dans lesquelles ils aboutissent, la plus grande partie du fluide ne circulerait pas dans le conduit mais prendrait un chemin préférentiel présentant le moins de pertes de charge et, donc devant l'obstacle en matière de résistance au débit que représentent les courbes du conduit hélicoïdal 1 de petit diamètre, sortirait du conduit par le premier orifice 3 vers les trémies 5 si elles étaient en communication (comme cela est le cas dans le principe du brevet initial) et ne retournerait dans le conduit que par le dernier orifice, le passage par les trémies en communication comportant moins de pertes de charge que le passage par le conduit hélicoïdal 1. Le résultat serait que, d'une part, la majeure partie du fluide ne passerait pas par le conduit et donc ne subirait pas les effets de la force centrifuge et ne serait pas filtré et, d'autre part, le fluide passant à travers la trémie et réintégrant le conduit par le dernier orifice, entraînerait avec lui les particules éjectées du conduit dans la trémie par la faible partie du fluide qui y serait quand même passé et les réintégrerait dans le flux à filtrer. L'efficacité du dispositif serait alors nulle en matière de filtration ce qui explique l'importance de cette innovation et motive cette demande de brevet complémentaire.
b) Suppression des d'éléments d'arrêt placées sur la face interne du conduit et destinées à piéger les particules à extraire du fluide.
   Compte tenu du fait que par l'isolation de chaque orifice l'un par rapport à l'autre le débit dans le conduit sera le débit total du dispositif, la vitesse linéaire, donc la vitesse angulaire du fluide et celle des particules entraînées par lui sera très grande ce qui provoquera une très grande force centrifuge. Cette force est alors suffisante pour éjecter les particules du conduit vers les trémies sans l'aide de ces plaques d'arrêt
   Cette amélioration et innovation par rapport au brevet initial est très intéressant car ces plaques d'arrêt étaient génératrices de pertes de charge et obligeait donc l'utilisation de systèmes d'aspiration et de refoulement de puissance plus élevées que celles nécessaires avec le dispositif décrit ci-dessus.

Le positionnement des divers éléments constitutifs donne à l'objet de l'invention un maximum d'effets utiles qui n'avaient pas été, à ce jour, obtenus par des procédés ou dispositifs similaires.

## Revendications

1. Procédé de séparation ou d'enrichissement de la concentration d'un ou plusieurs composés contenus dans un mélange de composants gazeux ou liquides, s'appliquant aux matériels destinés à permettre l'élimination ou la récupération de particule en suspension dans un gaz ou dans un liquide, et dans lequel le mélange est introduit par l'effet d'une pression dans un conduit hélicoïdal (1) multi-spires ayant un ou plusieurs orifices (3) de sortie reliés chacun à un dispositif de collecte de façon à lui faire subir une trajectoire forcée permettant d'atteindre de très grandes vitesses de rotation,
**caractérisé en ce** le débit de sortie à chaque orifice (3) est contrôlé au moyen d'un régulateur de débit (10) de manière à n'autoriser le passage que d'un débit égal au débit calculé à cet endroit des molécules d'un des composants choisi du mélange, à une concentration elle aussi choisie.

2. Procédé selon la revendication 1, **se caractérisant par le fait que** la vitesse de rotation des particules dans les conduits hélicoîdaux (1) est supérieure à 1 millions de tours/minute.

3. Dispositif de séparation ou d'enrichissement de la concentration d'un ou plusieurs composés contenus dans un mélange de composants gazeux ou liquides, destiné à l'application du procédé selon les revendications précédentes et constitué d'un conduit hélicoïdal (1) comportant plusieurs spires (2) et percé d'orifices (3) placés sur la paroi correspondant au plus grand diamètre des spires (2), les dits orifices communiquant chacun avec un dispositif de collecte,
**caractérisé en ce que** chaque dispositif de collecte est constitué d'un régulateur de débit (10) automatique ou manuel, massique ou.volumique débitant dans un élément de stockage (11).

4. Dispositif selon la revendication 3, **se caractérisant par le fait qu'**il comporte un dispositif de collecte disposé en fin de conduit (2) afin de recueillir du
ou des gaz légers résiduels qui est constitué d'un régulateur de débit (10) automatique ou manuel, massique ou volumétrique débitant dans un élément de stockage (11).

5. Dispositif selon l'une quelconque des revendication 3 ou 4, **se caractérisant par le fait que** les orifices (3) ne comportent, sur la face interne du conduit hélicoïdal (1), aucun élément d'arrêt destiné à piéger les particules à extraire du fluide.

6. Dispositif selon l'une quelconque des revendications 2 à 5, **se caractérisant par le fait qu'**il comporte un appareil de compression (6) placé en amont du conduit hélicoïdal (1) et destiné à introduire le fluide à filtrer dans le système.

7. Dispositif selon l'une quelconque des revendications 3 à 5, **se caractérisant par le fait qu'**il comporte un appareil d'aspiration (7) placé en aval du conduit hélicoïdal. (1) et destiné à extraire le fluide à filtrer du système.

8. Dispositif selon l'une quelconque des revendications 3 à 7 **se caractérisant par le fait que** chaque dispositif de collecte est constitué d'une trémie (5) indépendante isolée des autres trémies et destinée à permettre aux particules entraînées vers la paroi externe des spires (2) par la force centrifuge de sortir du conduit (1) pour être recueillie dans lesdites trémies.

9. Dispositif selon la revendication 8, **se caractérisant par le fait que** chaque spire (2) du conduit hélicoïdal (1) comporte un orifice (3) communiquant avec une trémie (5) indépendante isolée des autres trémies.

10. Dispositif selon l'une quelconque des revendications 3 à 9, **se caractérisant par le fait que** plusieurs conduits hélicoïdaux (1) sont associés et montés en parallèle pou constituer une installation de filtration.

## Claims

1. Process for separating and enriching the concentration of one or more compounds contained in a mixture of gas or liquid components , applying to the materials used to eliminate or recover particles suspended in a gas or a liquid, and into which the mixture is introduced by the pressure in a multi-spiral helicoidal conduit (1) with one or more outlet orifice(s) (3) each one connected to a collection device so that it follows an obligatory trajectory that can reach very high speeds of rotations,
**characterized in that** the flow from each opening (3) is controlled by means of a flow controller (10) so as to allow passage of a flow that is equal only to the calculated flow at this place of the molecules of one of the selected components of the mixture, at a selected concentration.

2. Process according to claim 1, **characterised in that** the rotational speed of the particles in the helicoidal conduits (1) is greater than 1 million rpm.

3. Device for the separation or enrichment of the concentration of one or more compounds contained in a mixture of gas or liquid components, intended for application of the process according to the aforesaid claims and consisting of a helicoidal conduit (1) comprising several spirals (2) and drilled orifices (3) placed on the wall corresponding to the largest diameter of the spirals (2), the said openings communicating each one with a collection device,
**characterized in that** each collection device consists of an automatic or manual mass or volume flow controller (10), each one communicating with a storage element (11).

4. Device according to claim 3, **characterized in that** it has a collection device arranged at the end of conduit (2) in order to collect the residual light gas(es) and consisting of a automatic or manual mass or volume flow controller (10) discharging into a storage element (11).

5. Device according to any of claims 3 or 4, **characterized in that** orifices (3) do not have, on the inner face of the helicoidal conduit (1), any element for trapping the particles to be extracted from the fluid.

6. Device according to any of claims 2 to 5, **characterized in that** it has compression apparatus (6) placed upstream of helicoidal conduit (1) and used to feed the liquid to be filtered into the system.

7. Device according to any of claims 3 to 5, **characterized in that** it comprises suction apparatus (7) placed downstream from the helicoidal conduit (1), and used to extract the fluid to be filtered from the system.

8. Device according to any of claims 3 to 7 **characterized in that** each collection device consists of a hopper (5) isolated from the other hoppers and used to allow the particles driven by the centrifugal force towards the outer wall of the spirals (2) to leave the conduit (1) for collection in the aforementioned hoppers.

9. Device according to claim 8, **characterized in that** each spiral (2) of helicoidal conduit (1) has an orifice (3) communicating with an independent hopper (5) isolated from the other hoppers.

10. Device according to any of claims 3 to 9, **characterized in that** several helicoidal conduits (1) are associated and assembled in parallel in order to constitute a filtration installation.

## Patentansprüche

1. Verfahren zur Trennung oder Anreicherung der Konzentration einer oder mehrerer Verbindungen in einer Mischung gasförmiger oder flüssiger Komponenten, bestimmt für Geräte zur Entfernung oder Rückgewinnung von in Gasen oder Flüssigkeiten suspendierten Partikeln, wobei die Mischung durch Druck in eine spiralförmige (1) Leitung mit mehreren Windungen und einer oder mehrerer Ausgangsöffnungen (3) eingeleitet wird und jede Ausgangsöffnung mit einer Sammelvorrichtung verbunden sind, so dass die Mischung eine Bahn durchlaufen muss, die das Erreichen hoher Rotationsgeschwindigkeiten gestattet, **gekennzeichnet dadurch,**
**dass** die an jeder Öffnung (3) austretende Menge von einem Durchflussregler (10) in der Weise gesteuert wird, dass nur eine vorher berechnete Menge von Molekülen einer zuvor bestimmten Komponente der Mischung in einer ebenfalls zuvor festgelegten Konzentration austreten kann.

2. Verfahren gemäß Anspruch 1, **gekennzeichnet dadurch, dass** die Rotationsgeschwindigkeit der Partikel in den spiralförmigen Leitungen (1) über 1 Million Umdrehungen pro Minute beträgt.

3. Verfahren zur Trennung oder Anreicherung der Konzentration einer oder mehrerer Verbindungen in einer Mischung gasförmiger oder flüssiger Komponenten, bestimmt zur Anwendung des Verfahrens gemäß den vorstehenden Ansprüchen und bestehend aus einer spiralförmigen Leitung (1) mit mehreren Windungen (2) und mit mehreren Öffnungen (3), die auf der dem größeren Durchmesser entsprechenden Wand der Windungen (2) eingebracht sind, wobei jede dieser Öffnungen mit einer Sammelvorrichtung in Verbindung steht, **gekennzeichnet dadurch,**
**dass** jede der Sammelvorrichtungen aus einem automatischen oder manuellen Durchflussregler (10) für Gewichte oder Volumina besteht und die Mengen in ein Lagerelement (11) abgibt.

4. Vorrichtung gemäß Anspruch 3, **gekennzeichnet dadurch,**
**dass** sie eine am Ende der Leitung (2) angeordnete Sammeleinrichtung besitzt, um ein oder mehrere leichte Restgase aufzufangen, bestehend aus einem automatischen oder manuellen Durchflussregler (10) für Gewichte oder Volumina, der die Mengen in ein Lagerelement (11) abgibt.

5. Vorrichtung gemäß einem der Ansprüche 3 oder 4, **gekennzeichnet dadurch, dass** die Öffnungen (3) auf der Innenseite der Spiralleitung (1) kein Element besitzen, das dazu dient, die aus dem Fluid zu entfernenden Partikel aufzufangen.

6. Vorrichtung gemäß einem der Ansprüche 2 bis 5, **gekennzeichnet dadurch, dass** ein Gerät zur Druckbeaufschlagung (6) vor der Spiralleitung (1) angeordnet ist, das zur Einleitung des zu filternden Fluids in das System bestimmt ist.

7. Vorrichtung gemäß einem der Ansprüche 3 bis 5, **gekennzeichnet dadurch, dass** ein Gerät zum Absaugen (7) nach der Spiralleitung (1) angeordnet ist, mit dem das zu filternde Fluid aus dem System abgezogen wird.

8. Vorrichtung gemäß einem der Ansprüche 3 bis 7, **gekennzeichnet dadurch, dass** jede Sammelvorrichtung aus einem Zuführkasten besteht, der von den anderen Zuführkästen unabhängig und getrennt ist und dazu dient, den an die Außenwand der Windungen (2) geführten Partikeln durch die Zentrifugalkraft den Austritt aus der Leitung (1) zu ermöglichen, so dass sie in dem genannten Zuführkästen aufgefangen werden.

9. Vorrichtung gemäß Anspruch 8, **gekennzeichnet dadurch, dass** jede Windung (2) der spiralförmigen Leitung (1) eine Öffnung (3) besitzt, die mit einem Zuführkasten (5) in Verbindung steht, der von den anderen Zuführkästen unabhängig und von diesen getrennt ist.

10. Vorrichtung gemäß einem der Ansprüche 3 bis 9, **gekennzeichnet dadurch, dass** mehrere spiralförmige Leitungen (1) zusammengehören und parallel installiert sind, um eine Filteranlage zu bilden.
